(19) Europäisches Patentamt
European Patent Office
Office européen des brevets

(11) **EP 4 697 121 B1**

(12) **EUROPEAN PATENT SPECIFICATION**

(45) Date of publication and mention
of the grant of the patent:
**13.05.2026 Bulletin 2026/20**

(21) Application number: **24793722.0**

(22) Date of filing: **26.09.2024**

(51) International Patent Classification (IPC):
**G05D 1/617** (2024.01)     **B25J 9/16** (2006.01)
**B25J 11/00** (2006.01)     **E02F 3/96** (2006.01)
**E02F 9/20** (2006.01)

(52) Cooperative Patent Classification (CPC):
**G05D 1/617; E02F 3/966; E02F 9/2045;
E02F 9/205; E02F 9/262;** G05D 2101/15;
G05D 2105/05; G05D 2107/90; G05D 2109/10

(86) International application number:
**PCT/CN2024/121341**

(87) International publication number:
**WO 2026/000673 (02.01.2026 Gazette 2026/01)**

(54) **RISK CONTROL METHOD AND DEVICE FOR DEMOLITION ROBOT**

RISIKOSTEUERUNGSVERFAHREN UND -VORRICHTUNG FÜR ABBRUCHROBOTER

PROCÉDÉ ET DISPOSITIF DE MAÎTRISE DES RISQUES POUR ROBOT DE DÉMOLITION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.06.2024 CN 202410870984**

(43) Date of publication of application:
**18.02.2026 Bulletin 2026/08**

(73) Proprietor: **Jiangsu XCMG Construction
Machinery
Research Institute Ltd.
Xuzhou, Jiangsu 221004 (CN)**

(72) Inventors:
• **JIAO, Qianqian**
Xuzhou, Jiangsu 221004 (CN)
• **YANG, Yuqiang**
Xuzhou, Jiangsu 221004 (CN)
• **LIANG, Kang**
Xuzhou, Jiangsu 221004 (CN)

(74) Representative: **Bayramoglu et al.
Mira Office
Kanuni Sultan Süleyman Boulevard 5387
Street Beytepe, floor 12, no:50
06800 Cankaya, Ankara (TR)**

(56) References cited:
CA-C- 3 049 695     CN-A- 114 102 584
CN-A- 116 339 397     CN-A- 117 001 664
CN-A- 118 456 443     JP-A- 2016 107 893
US-B2- 9 475 193

• MEGHDARI ET AL: "Neural-network-based observer for real-time tipover estimation", MECHATRONICS, PERGAMON PRESS, OXFORD, GB, vol. 15, no. 8, 1 October 2005 (2005-10-01), pages 989 - 1004, XP005021137, ISSN: 0957-4158, DOI: 10.1016/ J.MECHATRONICS.2005.03.005
• LUPOY MARK LAWRENCE D ET AL: "Design and implementation of an intelligent monitoring system for real-time tip-over assessment of mobile manipulator", 2022 IEEE 14TH INTERNATIONAL CONFERENCE ON HUMANOID, NANOTECHNOLOGY, INFORMATION TECHNOLOGY, COMMUNICATION AND CONTROL, ENVIRONMENT, AND MANAGEMENT (HNICEM), IEEE, 1 December 2022 (2022-12-01), pages 1 - 6, XP034336960, DOI: 10.1109/ HNICEM57413.2022.10109593

**Description**

TECHNICAL FIELD

The invention relates to a risk control method and apparatus for demolition robots, and belongs to the field of mechanical engineering.

BACKGROUND

With the development of industrial automation and robotic technology, the use of unmanned three-arm demolition robots in complex environments is growing rapidly, particularly in situations that demand high-precision positioning, minimal energy consumption, efficiency in multi-task operations, and obstacle avoidance. In operation, the three-arm demolition robot is rarely at risk of tipping over thanks to its support legs. However, it may face tipping and walking path risks in complex environments (such as being obstructed by obstacles or falling into pits). US9475193B2 discloses systems and methods for providing a robotic vehicle with tip over prevention. The methods involve: determining a stability footprint, attitude and orientation of the robotic vehicle; computing a center of gravity of the robotic vehicle; projecting the center of gravity onto the stability footprint; determining whether the center of gravity is within an acceptable region of the stability footprint; calculating a new desired configuration for a movable component of the robotic vehicle when a determination is made that the center of gravity is within the acceptable region of the stability footprint; and commanding the movable component to the new desired configuration. CA3049695C discloses a multi-terrain inspection robotic device and methods for configuring and guiding the same. MEGHDARI ET AL ("Neural-network-based observer for real-time tipover estimation", MECHATRONICS, PERGAMON PRESS, OXFORD, GB, vol. 15, no. 8, 1 October 2005, pages 989-1004) disclose a neural-network-based algorithm that enables autonomous mobile manipulator to detect its instable situations. LUPOY MARK LAWRENCE D ET AL ("Design and implementation of an intelligent monitoring system for real-time tip-over assessment of mobile manipulator", 2022 IEEE 14TH INTERNATIONAL CONFERENCE ON HUMANOID, NANOTECHNOLOGY, INFORMATION TECHNOLOGY, COMMUNICATION AND CONTROL, ENVIRONMENT, AND MANAGEMENT (HNICEM), IEEE, 1 December 2022, pages 1-6) discloses a real-time tip-over monitoring system that can be applied to avoid a mobile manipulator tip-over.

SUMMARY

The invention provides a risk control method and apparatus for demolition robots, solving the problems disclosed in the background art.

According to one aspect of the disclosure, a risk control method for demolition robots is provided, comprising a first method implemented in real time during a walking process of a demolition robot, wherein the first method comprises:

determining a posture of the demolition robot and corresponding posture parameters according to posture information of the demolition robot;

according to the posture parameters, the posture information and environmental information of the demolition robot, using a trained neural network to determine a risk category associated with the demolition robot;

in response to the risk category comprising solely walking path risks, re-planning a walking path according to the environmental information of the demolition robot, and controlling the demolition robot according to the re-planned walking path;

in response to the risk category being comprising tipping risks, determining a tipping direction of the demolition robot according to the posture information of the demolition robot and a tipping line, and adjusting the posture of the demolition robot according to the tipping direction; and

in response to the risk category comprising tipping risks and walking path risks, determining a tipping direction of the demolition robot according to the posture information of the demolition robot and a tipping line, adjusting the posture of the demolition robot according to the tipping direction, re-planning a walking path according to the environmental information of the demolition robot after the tipping risks are removed, and controlling the demolition robot according to the re-planned walking path.

In some embodiments of the disclosure, the risk control method for demolition robots further comprises a second method implemented in real time in operation of the demolition robot, wherein the second method comprises:

determining a posture of the demolition robot according to posture information of the demolition robot;

determining whether the demolition robot has tipping risks according to the posture of the demolition robot, the posture information of the demolition robot and the tipping line; and

in response to the presence of tipping risks, determining the tipping direction of the demolition robot according to the posture information of the demolition robot and the tipping line, and adjusting the posture of the demolition robot according to the tipping direction.

In some embodiments of the disclosure, determining the tipping direction of the demolition robot according to the posture information of the demolition robot and the tipping line comprises:

according to tipping angles on tipping lines in the posture information, calculating the probability that each tipping angle exceeds a corresponding angle threshold; and

according to a tipping line corresponding to a maximum probability, determining the tipping direction of the demolition robot.

In some embodiments of the disclosure, the risk control method for demolition robots further comprises a third method for implementing an emergency stop in operation or during the walking process of the demolition robot, wherein the third method comprises:

determining a posture of the demolition robot according to posture information of the demolition robot;

determining whether the demolition robot has tipping risks according to the posture of the demolition robot, the posture information of the demolition robot during the emergency stop and the tipping line; and

in response to the presence of tipping risks, determining the tipping direction of the demolition robot according to the posture information of the demolition robot during the emergency stop, and adjusting the posture of the demolition robot according to the tipping direction.

In some embodiments of the disclosure, determining whether the demolition robot has tipping risks comprises:

calculating a stability coefficient of the demolition robot according to a moment arm length between a center of mass of components of the demolition robot in the posture information and a corresponding tipping line, the stability coefficient of the demolition robot being a ratio of a stabilizing moment of the demolition robot to a tipping moment, and the corresponding tipping line being a tipping line corresponding to the posture of the demolition robot; and
in response to the stability coefficient of the demolition robot being less than a stability threshold, determining that the demolition robot has tipping risks.

In some embodiments of the disclosure, a formula for calculating the stability coefficient of the demolition robot is:

$$K=M1/M0;$$

$$M1=G7{\times}L7+ G6{\times}L6+ G5{\times}L5+ G3{\times}L3+ G2{\times}L2+ G1{\times}L1;$$

$$M0=G4{\times}L4;$$

where K is the stability coefficient of the demolition robot, M1 is the stabilizing moment of the demolition robot, M0 is the tipping moment of the demolition robot, G7-G1 represent gravitational forces of a cabin, a mechanical arm, a hydraulic system, an electrical system, a power system, a rotary platform and a tracked chassis of the demolition robot respectively, and L7-L1 represent a distance between a center of mass of the cabin and the corresponding tipping line, a distance between a center of mass of the mechanical arm and the corresponding tipping line, a distance between a center of mass of the hydraulic system and the corresponding tipping line, a distance between a center of mass of the electrical system and the corresponding tipping line, a distance between a center of mass of the power system and the corresponding tipping line, a distance between a center of mass of the rotary platform and the corresponding tipping line, and a distance between a center of mass of the tracked chassis and the corresponding tipping line respectively.

In some embodiments of the disclosure, determining the posture of the demolition robot and the corresponding posture parameters according to the posture information of the demolition robot comprises:

calculating front and rear height differences of tracks on two sides at the same moment in the posture information;

in response to the front and rear height differences of the tracks on two sides being both greater than 0 and greater than a first height difference threshold, determining that the demolition robot is in an uphill posture, the front and rear height differences of the tracks on two sides being parameters for the uphill posture;

in response to the front and rear height differences of the tracks on two sides being both less than 0 and less than a negative value of the first height difference threshold, determining that the demolition robot is in a downhill posture, the front and rear height differences of the tracks on two sides being parameters for the downhill posture;

calculating a height difference between a left track and a right track at the same moment in the posture information;

in response to the height difference between the left track and the right track being greater than a second height difference threshold, determining that the demolition robot is in a tilted posture, the height difference between the left track and the right track being a parameter for the tilted posture; and

in response to the front and rear height differences of the tracks on two sides being within the range of the first threshold and the negative value of the first threshold, and the height difference between the left track and the right track being not greater than the second height difference threshold, determining that the demolition robot is in a horizontal posture, a parameter for the horizontal posture being 0.

According to another aspect of the disclosure, a risk control apparatus for demolition robots is provided, comprising a first apparatus configured to work in real time during a walking process of a demolition robot, wherein the first apparatus comprises:

a working condition module configured to determine a posture of the demolition robot and corresponding posture parameters according to posture information of the demolition robot;

a risk category module configured to, according to the posture parameters, the posture information and environmental information of the demolition robot, use a trained neural network to determine a risk category associated with the demolition robot;

a path planning module configured to, in response to the risk category comprising solely walking path risks, re-plan a walking path according to the environmental information of the demolition robot, and control the demolition robot according to the re-planned walking path;

a stability control module configured to, in response to the risk category comprising solely tipping risks, determine a tipping direction of the demolition robot according to the posture information of the demolition robot and a tipping line, and adjust the posture of the demolition robot according to the tipping direction; and

a sequential control module configured to, in response to the risk category comprising tipping risks and walking path risks, determine a tipping direction of the demolition robot according to the posture information of the demolition robot and a tipping line, adjust the posture of the demolition robot according to the tipping direction, re-plan a walking path according to the environmental information of the demolition robot after the tipping risks are removed, and control the demolition robot according to the re-planned walking path.

According to another aspect of the disclosure, a computer-readable storage medium is provided, wherein the computer-readable storage medium stores one or more programs, and the one or more programs comprise instructions which, when executed by a computing device, cause the computing device to implement the risk control method for demolition robots.

According to another aspect of the disclosure, a computer device is provided, comprising one or more processors and one or more memories, wherein one or more programs are stored in the one or more memories and configured to be executed by the one or more processors, and the one or more programs comprise instructions for implementing the risk control method for demolition robots.

Beneficial effects: During the walking process of a demolition robot, working conditions are determined according to posture information of the demolition robot. A neural network is employed to assess risk categories. When only walking path risks are present, a walking path is re-planned. If only tipping risks are identified, a tipping direction of the demolition robot is determined, and a posture of the demolition robot is adjusted according to the tipping direction. In cases where both walking path risks and tipping risks exist, priority is given to address the tipping risks, followed by the walking path risks. This approach reduces the tipping and walking path risks faced by the demolition robot walking in complex environments, thereby significantly improving the stability and safety of the demolition robot in complex environments.

BRIEF DESCRIPTION OF THE DRAWINGS

Fig. 1 is a flowchart of a first method in a risk control method for demolition robots;
Fig. 2 is a schematic diagram of a tipping line;
Fig. 3 is a flowchart of a second method in a risk control method for demolition robots;
Fig. 4 is a schematic diagram of moments in a horizontal posture; and
Fig. 5 is a flowchart of a third method in a risk control method for demolition robots.

DETAILED DESCRIPTION OF THE EMBODIMENTS

The technical schemes in the embodiments of the disclosure are clearly and completely described in the following with reference to the drawings in the embodiments of the disclosure. It is obvious that the described embodiments are only illustrative ones and are not all possible ones of the disclosure. The description of at least one exemplary embodiment below is only illustrative, and in no way should it be taken as any limitation on the disclosure, its application or uses. Based on the embodiments of the disclosure, all other embodiments obtained by those of ordinary skill in the art without creative labor also fall within the scope of the disclosure.

The relative arrangement, numerical expressions and numerical values of components and steps set forth in these embodiments do not limit the scope of the disclosure unless otherwise specified.

Meanwhile, it should be understood that for convenience of description, the dimensions of various parts shown in the drawings are not drawn according to the actual proportional relationship.

Techniques, methods and devices known to those skilled in the relevant fields may not be discussed in detail, but they should be regarded as part of the specification under appropriate circumstances.

In all examples shown and discussed herein, any specific values should be interpreted as illustrative only and not as a limitation. Therefore, other examples of exemplary embodiments may have different values.

It should be noted that similar reference numerals and letters indicate similar items in the following figures, so once an item is defined in one figure, it will not be further discussed in the following figures.

To address the risk issues associated with demolition robots in a complex environment, the disclosure proposes a risk control method for demolition robots, which specifically comprises a first method implemented in real time during the walking process of a demolition robot, a second method implemented in real time in operation of the demolition robot, and a third method for implementing an emergency stop in operation or during the walking process of the demolition robot.

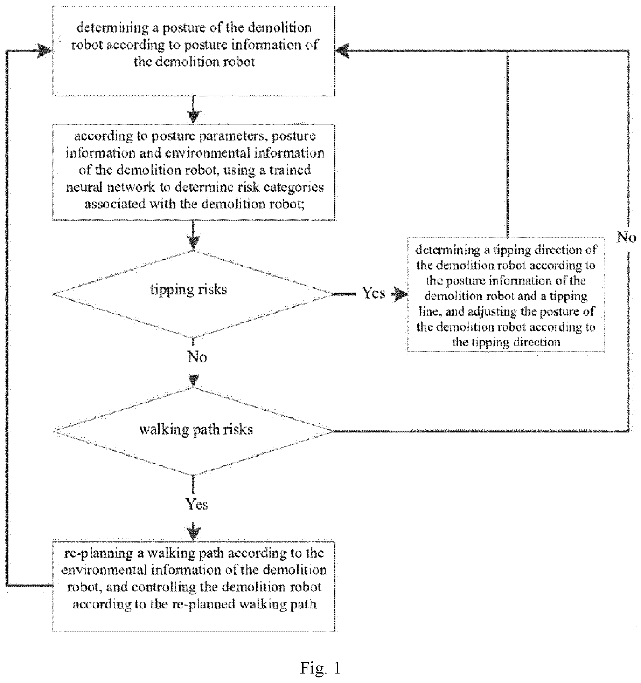

Fig. 1 is a schematic diagram of an embodiment of the first method of the disclosure, which can be executed by an on-board controller of the demolition robot, and the method is implemented in real time during the walking process of the demolition robot.

As shown in Fig. 1, step 1 of the embodiment involves determining a posture of the demolition robot according to posture information of the demolition robot.

It should be noted that the posture information is used to reflect the posture of the demolition robot, which may include a height of tracks, a tipping angle on a tipping line, a moment arm length from the center of mass of components to a corresponding tipping line, etc. Here, height information may be collected by a laser radar installed on a rotary platform connected with a track chassis, and the height of tracks can be obtained according to a collected height and calibrated heights of the track chassis and the rotary platform; the tipping angle is collected by tipping sensors, which are respectively installed in the oblique, lateral and longitudinal directions of the track chassis; and the moment arm length can also be collected by a rotatable laser radar, which measures a distance from the center of mass to a designated point on the tipping line, and then calculates the moment arm length according to a rotation angle of the laser radar.

It should be noted that in the scenario, the posture of the demolition robot mainly includes uphill, downhill, tilted, and horizontal positions. Since the risks and control associated with different postures vary, in order to ensure accurate control, the process of determining the posture of the demolition robot can be as follows in some embodiments:

(1) calculating front and rear height differences of tracks on two sides at the same moment in the posture information, which can be expressed as:

$$\triangle h = h1 - h2;$$

where $\triangle h$ is the front and rear height difference of the same track, and h1 and h2 are the heights of the front and rear of the same track respectively;

(2) in response to the front and rear height differences of the tracks on two sides being both greater than 0 and greater than a first height difference threshold, determining that the demolition robot is in an uphill posture, the front and rear height differences of the tracks on two sides being parameters for the uphill posture;

$$\text{uphill posture} = \begin{cases} \text{Yes} & \Delta h > 0, \ \Delta h > \text{first height difference threshold} \\ \text{No} & \text{otherwise} \end{cases};$$

where the first height difference threshold may be 60 cm, and the front and rear height differences of the tracks on two sides may be used as parameters for the uphill posture;

in response to the front and rear height differences of the tracks on two sides being both less than 0 and less than a negative value of the first height difference threshold, determining that the demolition robot is in a downhill posture, the front and rear height differences of the tracks on two sides being parameters for the downhill posture;

(3) calculating a height difference between a left track and a right track at the same moment in the posture information, which can be expressed as:

$$\triangle H = H1 - H2;$$

where $\triangle H$ is the height difference between the left track and the right track, and H1 and H2 are the height of the left track and the height of the right track respectively;

(4) in response to the height difference between the left track and the right track being greater than a second height difference threshold, determining that the demolition robot is in a tilted posture, which can be expressed as:

$$\text{tilted posture} = \begin{cases} \text{Yes} & \Delta H > \text{second height difference threshold} \\ \text{No} & \text{otherwise} \end{cases};$$

where the second height difference threshold may be 40 cm, and the height difference between the left track and the right track may be used as a parameter for the tilted posture;

(5) in response to the front and rear height differences of the tracks on two sides being within the range of the first threshold and the negative value of the first threshold, and the height difference between the left track and the right track being not greater than the second height difference threshold, determining that the demolition robot is in a horizontal posture, a parameter for the horizontal posture being 0.

Returning to Fig. 1, step 2 of the embodiment involves, according to posture parameters, posture information and environmental information of the demolition robot, using a trained neural network to determine risk categories associated with the demolition robot.

It should be noted that the neural network here may utilize a ResNet50 deep learning model. Before inputting parameters and information into the model, the posture parameters and posture information first undergo filtering and normalization. The environmental information, primarily consisting of captured video images, is first denoised and resized to a standard dimension of 224x224 pixels. The preprocessed data are then input into the model to obtain the risk categories associated with the demolition robot. For instance, the trend of changes in the posture of the demolition robot can be obtained according to the posture parameters and posture information, allowing for the assessment of potential tipping risks. Additionally, key visual information, such as surrounding terrain and obstacles, can be derived from the video images to determine the presence of walking path risks.

Returning to Fig. 1, step 3 of the embodiment involves, in response to a risk category being solely walking path risks, re-planning a walking path according to the environmental information of the demolition robot, and controlling the demolition robot according to the re-planned walking path.

It should be noted that the environmental information (i.e. video images) often includes terrain, obstacle position, slope information, etc. In response to the presence of walking path risks, path planning can be carried out again according to the information.

Path planning is a multi-objective optimization problem, and an objective function can be defined, which comprehensively considers multiple goals during the walking process of the demolition robot, including high-precision positioning, minimal energy consumption and safe obstacle avoidance. By defining a function for the multi-objective optimization problem, which is expressed through a mathematical model, and employing a multi-objective optimization algorithm, optimal or near-optimal solutions can be found.

Let the objective function be F(x), where x represents decision variables related to the walking of the demolition robot, including path planning parameters, speed control parameters, and so on. Using the multi-objective optimization algorithm, a solution set can be found to minimize the value of the objective function (cost function) while satisfying the constraints of the objective function. This solution set may contain multiple solutions, each representing a potential walking strategy for the demolition robot. By analyzing the solution set, the optimal or near-optimal solution can be identified, providing support and guidance for path planning.

For example, F(x)=f1(x)+ f2(x)+f3(x);

where f1(x)=k1× (actual accuracy-target accuracy)², f2(x)=k2× energy consumption, f3(x)=k3× (obstacle avoidance safety distance-safety distance threshold), k1-k3 are weight coefficients used to adjust the priority of different goals, f1(x) represents an accuracy cost, and f2(x) denotes an energy consumption cost; the energy consumption cost specifically depends on the driving method of the demolition robot; if it is electrically driven, the energy consumption cost is the product of electric energy consumption and electric energy cost, and if it is fuel-driven, the energy consumption cost is the product of fuel consumption and fuel cost; and f3(x) represents an obstacle avoidance cost, indicating the safety loss of the demolition robot in the obstacle avoidance process. Here, the safe distance threshold is generally 70 cm.

Returning to Fig. 1, step 4 of the embodiment involves, in response to a risk category being solely tipping risks, determining a tipping direction of the demolition robot according to the posture information of the demolition robot and a tipping line, and adjusting the posture of the demolition robot according to the tipping direction.

It should be noted that the demolition robot tips over along a certain tipping line, which refers to the axis around which the entire vehicle rotates during a tipping situation.

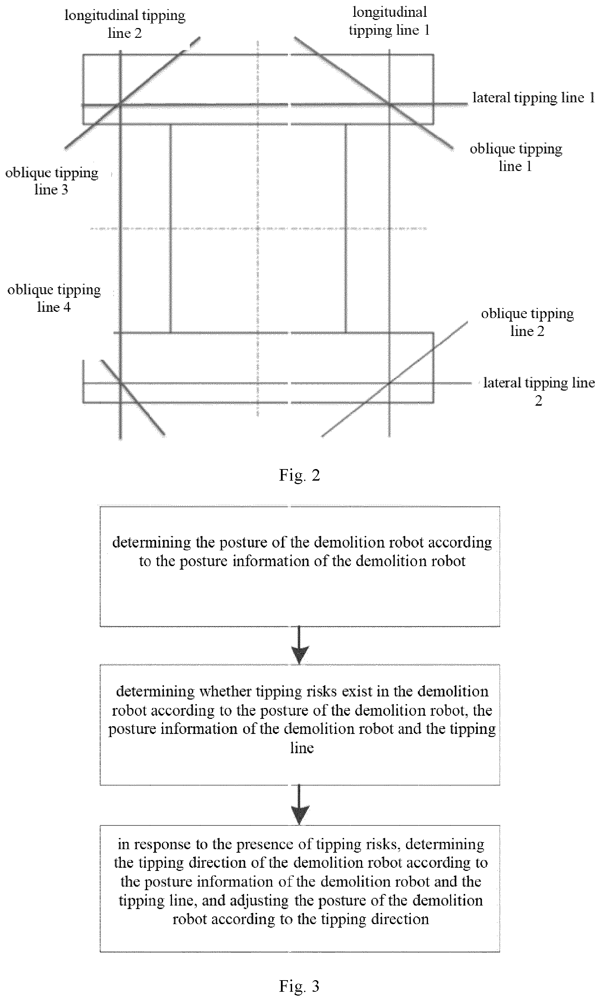

According to existing knowledge, the tipping lines primarily include longitudinal tipping lines, lateral tipping lines, and oblique tipping lines. The longitudinal tipping lines include an intersection of a vertical plane where centers of front walking wheels on both sides of the track chassis are located with the ground, as well as an intersection of a vertical plane where centers of rear walking wheels on both sides with the ground. The lateral tipping lines include an intersection of a vertical plane where walking wheels on one side of the track chassis are located with the ground, and an intersection of a vertical plane where walking wheels on the other side of the track chassis are located with the ground. The oblique tipping lines are intersections of vertical planes where intersection points parallel to a diagonal are located with the ground, the diagonal is defined by a quadrilateral formed by all the longitudinal and lateral tipping lines, and the intersection points are where the longitudinal and lateral tipping lines cross. The arrangement of the tipping lines can be seen in Fig. 2, which shows two longitudinal tipping lines, two lateral tipping lines, and four oblique tipping lines.

It should be noted that determining the tipping direction means determining a tipping line with the maximum probability of tipping over for the demolition robot, so in some embodiments, the specific process of determining the tipping direction of the demolition robot may comprise:

(41) according to tipping angles on tipping lines in the posture information, calculating the probability that each tipping angle exceeds a corresponding angle threshold;

it should be noted that assuming there are a total of N tipping lines, where N=8, the tipping angles on each tipping line are represented as $\theta_1$-$\theta_N$, the corresponding angle thresholds for each tipping line are denoted as $[\theta_1]$-$[\theta_N]$ (the angle threshold is generally 30°), and the probability distribution of the tipping angles on each tipping line may be expressed as P($\theta_i$), where i = 1, 2, ..., N;

the tipping line with the maximum probability of occurrence and the greatest risk is determined by comparing the probabilities of each tipping line exceeding the angle threshold; let the maximum probability of exceeding the angle threshold be $P_{max}$, expressed as:

$$P_{max}=\max(P(\theta_1>[\theta_1]),\ P(\theta_2>[\theta_2]),\ldots,\ P(\theta_N>[\theta_N]));$$

the tipping line corresponding to $P_{max}$ is the most dangerous tipping line, meaning that the demolition robot is very likely to tip over along this line;

(42) according to a tipping line corresponding to a maximum probability, determining the tipping direction of the demolition robot.

It should be noted that after the most dangerous tipping line is determined, the tipping direction with the maximum probability will be known.

To prevent tipping, the posture of the demolition robot can be adjusted according to the tipping direction, specifically by controlling a mechanical arm. For example, if the demolition robot is likely to tip over along longitudinal tipping line 1, the mechanical arm should be retracted; if the demolition robot is likely to tip over along longitudinal tipping line 2, the mechanical arm should be extended forward. Adjustments are primarily made through the movement of the mechanical arm to modify the moment. For instance, in a three-segment mechanical arm structure, the connections between a vehicle body and a first segment, the first segment and a second segment, the second segment and a third segment, as well as the third segment and an end effector, are all realized through cylinders. The extension and retraction of the cylinders lead to changes in posture and further adjustments of the moments. This is an ongoing adjustment process (a relatively standard procedure, which will not be described in detail here) until the demolition robot is free from tipping risks.

Returning to Fig. 1, step 5 of the embodiment involves, in response to a risk categories comprising tipping risks and walking path risks, determining a tipping direction of the demolition robot according to the posture information of the demolition robot and a tipping line, adjusting the posture of the demolition robot according to the tipping direction, re-planning a walking path according to the environmental information of the demolition robot after the tipping risks are removed, and controlling the demolition robot according to the re-planned walking path.

According to the above method, during the walking process of a demolition robot, a posture of the demolition robot is determined according to posture information of the demolition robot. A neural network is employed to assess risk categories. When only walking path risks are present, a walking path is re-planned. If only tipping risks are identified, a tipping direction of the demolition robot is determined, and a posture of the demolition robot is adjusted according to the tipping direction. In cases where both walking path risks and tipping risks exist, priority is given to address the tipping risks, followed by the walking path risks. This approach reduces the tipping and walking path risks faced by the demolition robot walking in complex environments, thereby significantly improving the stability and safety of the demolition robot in complex environments.

It should be noted that apart from walking, the demolition robot will also carry out operations in the scenario, mainly including demolition operations, stone turning operations, and excavation tasks. During these operations, the demolition robot extends its surrounding support legs to ensure stability throughout the process.

However, if a particular support leg consistently bears a significant load during prolonged operations, it will greatly reduce the lifespan of the support leg. Therefore, the disclosure also introduces a second method implemented in real time in operation of the demolition robot.

Fig. 3 is a schematic diagram of an embodiment of the second method of the disclosure, which can be executed by an on-board controller of the demolition robot.

As shown in Fig. 3, S1 of the embodiment involves determining a posture of the demolition robot according to posture information of the demolition robot.

It should be noted that the posture determination process is the same as that in the first method, which will not be repeated here.

Returning to Fig. 3, S2 of the embodiment involves determining whether the demolition robot has tipping risks according to the posture of the demolition robot, the posture information of the demolition robot and the tipping line.

It should be noted that the tipping risk here refers to the tendency to tip over to one side of the demolition robot, indicating that the support leg on that side is under significant stress and needs adjustment.

Since the support legs support the demolition robot, the assessment can be directly based on moments, and the specific process may be as follows:

(S21) calculating a stability coefficient of the demolition robot according to a moment arm length between a center of mass of components of the demolition robot in the posture information and a corresponding tipping line, the corresponding tipping line being a tipping line corresponding to the posture of the demolition robot;

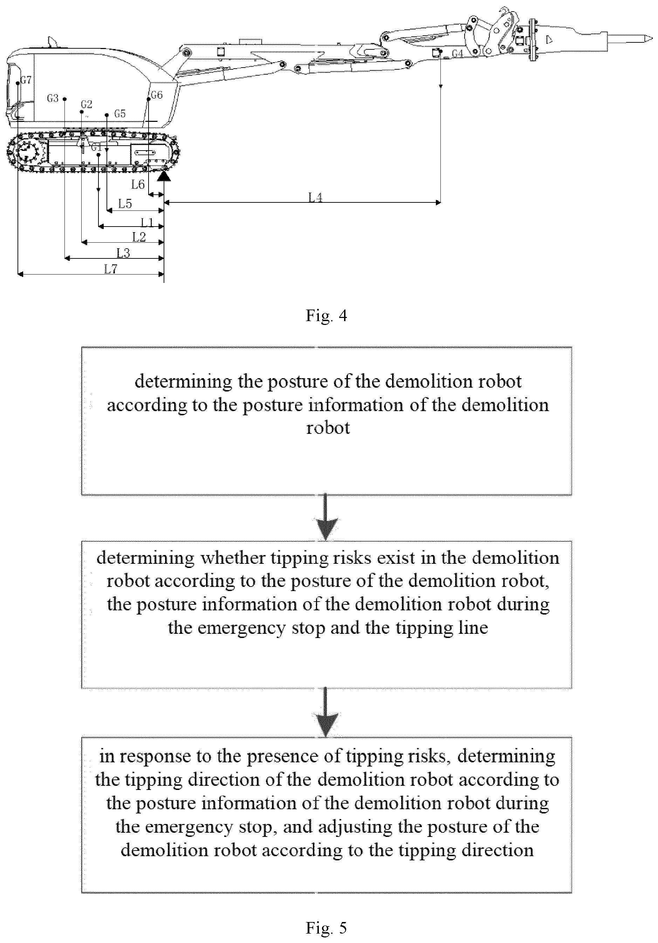

the center of mass of components of the demolition robot can be seen in Figs. 4 and 5, from which it can be seen that the corresponding tipping lines are different in different postures; Fig. 4 shows a horizontal posture, so the corresponding tipping line is longitudinal tipping line 1; the tipping line corresponding to the uphill posture is longitudinal tipping line 2; other postures correspond to different tipping lines; for example, the downhill posture corresponds to longitudinal tipping line 1, and tipping to one side corresponds to a lateral tipping line;

the stability coefficient of the demolition robot may be a ratio of a stabilizing moment of the demolition robot to a tipping moment, which can be as follows:

$$K=M1/M0;$$

$$M1=G7{\times}L7+ G6{\times}L6+ G5{\times}L5+ G3{\times}L3+ G2{\times}L2+ G1{\times}L1;$$

$$M0=G4{\times}L4;$$

where K is the stability coefficient of the demolition robot, M1 is the stabilizing moment of the demolition robot, M0 is the tipping moment of the demolition robot, G7-G1 represent gravitational forces of a cabin, a mechanical arm, a hydraulic system, an electrical system, a power system, a rotary platform and a track chassis of the demolition robot respectively, and L7-L1 represent a distance between a center of mass of the cabin and the corresponding tipping line, a distance between a center of mass of the mechanical arm and the corresponding tipping line, a distance between a center of mass of the hydraulic system and the corresponding tipping line, a distance between a center of mass of the electrical system and the corresponding tipping line, a distance between a center of mass of the power system and the corresponding tipping line, a distance between a center of mass of the rotary platform and the corresponding tipping line, and a distance between a center of mass of the track chassis and the corresponding tipping line respectively;

(S22) in response to the stability coefficient of the demolition robot being less than a stability threshold (generally 1.15), determining that the demolition robot has tipping risks.

Returning to Fig. 3, S3 of the embodiment involves, in response to the presence of tipping risks, determining the tipping direction of the demolition robot according to the posture information of the demolition robot and the tipping line, and adjusting the posture of the demolition robot according to the tipping direction.

It should be noted that the method for determining the tipping direction of the demolition robot and the adjustment method are consistent with those in the first method, which will not be repeated here.

According to the above method, in operation of a demolition robot, a posture of the demolition robot is determined according to posture information of the demolition robot. The presence of tipping risks is assessed based on the stabilizing moment and tipping moment, and the tipping direction of the demolition robot is determined when tipping risks are present. The posture of the demolition robot is then adjusted according to the tipping direction, thereby regulating the force on the support legs and reducing the risk of damage. This significantly improves the stability and safety of the demolition robot in complex environments.

It should be noted that during the walking and operation processes, the demolition robot may encounter emergencies, such as component failures, oil leaks, or low battery levels. In such cases, a remote control will issue an emergency stop command. At this point, the demolition robot may face a tipping risk due to inertia; for instance, if it suddenly stops while moving forward, it may tip forward. Therefore, the disclosure also introduces a third method for implementing an emergency stop in operation or during the walking process of the demolition robot.

Fig. 5 is a schematic diagram of an embodiment of the third method of the disclosure, which can be executed by an on-board controller of the demolition robot.

As shown in Fig. 5, A1 of the embodiment involves determining a posture of the demolition robot according to posture information of the demolition robot.

It should be noted that the posture determination process is the same as that in the first method, which will not be repeated here.

Returning to Fig. 5, A2 of the embodiment involves determining whether the demolition robot has tipping risks according to the posture of the demolition robot, the posture information of the demolition robot during the emergency stop and the tipping line.

It should be noted that the specific process of this step is the same as that in the second method, which will not be repeated here.

Returning to Fig. 5, A3 of the embodiment involves, in response to the presence of tipping risks, determining the tipping direction of the demolition robot according to the posture information of the demolition robot during the emergency stop, and adjusting the posture of the demolition robot according to the tipping direction.

It should be noted that tipping may occur due to inertia during an emergency stop. Therefore, it is only necessary to know the posture at the time of the emergency stop to determine the corresponding tipping line and direction. Taking the example of an emergency stop while moving forward, the tipping direction would be forward, with the corresponding tipping line being longitudinal tipping line 1.

It should be noted that the adjustment methods are consistent with those in the first method, which will not be repeated here.

According to the above method, during an emergency stop of a demolition robot, a posture of the demolition robot is determined according to posture information of the demolition robot. The presence of tipping risks is assessed based on the stabilizing moment and tipping moment, and the tipping direction of the demolition robot is determined when tipping risks are present. The posture of the demolition robot is then adjusted according to the tipping direction, thereby ensuring stability during an emergency stop. This significantly improves the stability and safety of the demolition robot in complex environments.

The disclosure also provides a virtual apparatus corresponding to the above method, namely a risk control apparatus for demolition robots, which can be loaded and executed by an on-board controller of the demolition robot, and specifically comprises a first apparatus working in real time during the walking process of a demolition robot, a second apparatus working in real time in operation of the demolition robot and a third apparatus for implementing an emergency stop in operation or during the walking process of the demolition robot.

The first apparatus comprises a working condition module, a risk category module, a path planning module and a stability control module.

The working condition module in this embodiment is configured to determine a posture of the demolition robot according to posture information of the demolition robot.

The risk category module in this embodiment is configured to, according to posture parameters, posture information and environmental information of the demolition robot, use a trained neural network to determine risk categories associated with the demolition robot.

The path planning module in this embodiment is configured to, in response to a risk category being solely walking path risks, re-plan a walking path according to the environmental information of the demolition robot, and control the demolition robot according to the re-planned walking path.

The stability control module in this embodiment is configured to, in response to a risk category being solely tipping risks, determine a tipping direction of the demolition robot according to the posture information of the demolition robot and a tipping line, and adjust the posture of the demolition robot according to the tipping direction.

The second apparatus comprises a working condition module, a risk assessment module and a first posture adjustment module.

The working condition module in this embodiment is configured to determine a posture of the demolition robot according to posture information of the demolition robot.

The risk assessment module in this embodiment is configured to determine whether the demolition robot has tipping risks according to the posture of the demolition robot, the posture information of the demolition robot and the tipping line.

The first posture adjustment module in this embodiment is configured to, in response to the presence of tipping risks, determine the tipping direction of the demolition robot according to the posture information of the demolition robot and the tipping line, and adjust the posture of the demolition robot according to the tipping direction.

The third apparatus comprises a working condition module, a risk assessment module and a second posture adjustment module.

The working condition module in this embodiment is configured to determine a posture of the demolition robot according to posture information of the demolition robot.

The risk assessment module in this embodiment is configured to determine whether the demolition robot has tipping risks according to the posture of the demolition robot, the posture information of the demolition robot during the emergency stop and the tipping line.

The second posture adjustment module in this embodiment is configured to, in response to the presence of tipping risks, determine the tipping direction of the demolition robot according to the posture information of the demolition robot during the emergency stop, and adjust the posture of the demolition robot according to the tipping direction.

The above apparatus ensures the stability of the demolition robot during walking, operation, and emergency stops, effectively improving the stability and safety of the demolition robot in complex environments.

Based on the same technical scheme, the disclosure also relates to a computer-readable storage medium, the computer-readable storage medium stores one or more programs, and the one or more programs comprise instructions which, when executed by a computing device, cause the computing device to implement the risk control method for demolition robots.

Based on the same technical scheme, the disclosure also relates to a computer device, comprising one or more processors and one or more memories, wherein one or more programs are stored in the one or more memories and configured to be executed by the one or more processors, and the one or more programs comprise instructions for implementing the risk control method for demolition robots.

It should be understood by those skilled in the art that the embodiments of the invention can be provided as methods, systems, or computer program products. Therefore, the invention may take the form of an entirely hardware embodiment, an entirely software embodiment, or an embodiment combining software and hardware aspects. Furthermore, the invention may take the form of a computer program product implemented on one or more computer usable storage media (including but not limited to magnetic disk memory, CD-ROM, optical memory, etc.) having computer usable program code embodied therein.

The invention is described with reference to flowcharts/or block diagrams of the method, device (system), and computer program product according to the embodiments of the invention. It should be understood that each flow and/or block in the flowcharts and/or block diagrams, and combinations of flows and/or blocks in the flowcharts and/or block diagrams, may be implemented by computer program instructions. These computer program instructions may be provided to a processor of a general purpose computer, special purpose computer, embedded processor, or other programmable data processing apparatus to produce a machine, such that the instructions executed by the processor of the computer or other programmable data processing apparatus produce a device for implementing the functions specified in one or more flows in the flowcharts and/or one or more blocks in the block diagrams.

These computer program instructions may also be stored in a computer-readable memory which can direct a computer or other programmable data processing apparatus to function in a particular manner, such that the instructions stored in the computer-readable memory produce an article of manufacture including an instruction device which implements the functions specified in one or more flows in the flowcharts and/or one or more blocks in the block diagrams.

These computer program instructions may also be loaded onto a computer or other programmable data processing apparatus such that a series of operational steps are performed on the computer or other programmable apparatus to produce a computer implemented process, and the instructions executed on the computer or other programmable apparatus provide steps for implementing the functions specified in one or more flows in the flowcharts/or one or more blocks in the block diagrams.

**Claims**

1. A risk control method for demolition robots, comprising a first method implemented in real time during a walking process of a demolition robot, wherein the first method comprises:
   determining a posture of the demolition robot and corresponding posture parameters according to posture information of the demolition robot; **characterized in that** the first method further comprises:

   according to the posture parameters, the posture information and environmental information of the demolition robot, using a trained neural network to determine a risk category associated with the demolition robot;
   in response to the risk category comprising solely walking path risks, re-planning a walking path according to the environmental information of the demolition robot, and controlling the demolition robot according to the re-planned walking path;
   in response to the risk category comprising solely tipping risks, determining a tipping direction of the demolition robot according to the posture information of the demolition robot and a tipping line, and adjusting the posture of the demolition robot according to the tipping direction; and
   in response to the risk category comprising tipping risks and walking path risks, determining a tipping direction of the demolition robot according to the posture information of the demolition robot and a tipping line, adjusting the posture of the demolition robot according to the tipping direction, re-planning a walking path according to the environmental information of the demolition robot after the tipping risks are removed, and controlling the demolition robot according to the re-planned walking path.

2. The risk control method for demolition robots according to claim 1, further comprising a second method implemented in real time in operation of the demolition robot, wherein the second method comprises:

   determining the posture of the demolition robot according to the posture information of the demolition robot;
   determining whether the demolition robot has tipping risks according to the posture of the demolition robot, the posture information of the demolition robot and the tipping line; and
   in response to the presence of tipping risks, determining the tipping direction of the demolition robot according to the posture information of the demolition robot and the tipping line, and adjusting the posture of the demolition robot according to the tipping direction.

3. The risk control method for demolition robots according to claim 1 or 2, wherein determining the tipping direction of the demolition robot according to the posture information of the demolition robot and the tipping line comprises:

   according to tipping angles on tipping lines in the posture information, calculating the probability that each tipping angle exceeds a corresponding angle threshold; and
   according to a tipping line corresponding to a maximum probability, determining the tipping direction of the demolition robot.

4. The risk control method for demolition robots according to claim 1, further comprising a third method for implementing an emergency stop in operation or during the walking process of the demolition robot, wherein the third method comprises:

   determining the posture of the demolition robot according to the posture information of the demolition robot;
   determining whether the demolition robot has tipping risks according to the posture of the demolition robot, the posture information of the demolition robot during the emergency stop and the tipping line; and
   in response to the presence of tipping risks, determining the tipping direction of the demolition robot according to the posture information of the demolition robot during the emergency stop, and adjusting the posture of the demolition robot according to the tipping direction.

5. The risk control method for demolition robots according to claim 2 or 4, wherein determining whether the demolition robot has tipping risks comprises:

   calculating a stability coefficient of the demolition robot according to a moment arm length between a center of mass of components of the demolition robot in the posture information and a corresponding tipping line, the stability coefficient of the demolition robot being a ratio of a stabilizing moment of the demolition robot to a tipping moment, and the corresponding tipping line being a tipping line corresponding to the posture of the demolition robot; and
   in response to the stability coefficient of the demolition robot being less than a stability threshold, determining that the demolition robot has tipping risks.

6. The risk control method for demolition robots according to claim 5, wherein a formula for calculating the stability coefficient of the demolition robot is:

$$K=M1/M0;$$

$$M1=G7{\times}L7+ G6{\times}L6+ G5{\times}L5+ G3{\times}L3+ G2{\times}L2+ G1{\times}L1;$$

$$M0=G4{\times}L4;$$

where K is the stability coefficient of the demolition robot, M1 is the stabilizing moment of the demolition robot, M0 is the tipping moment of the demolition robot, G7-G1 represent gravitational forces of a cabin, a mechanical arm, a hydraulic system, an electrical system, a power system, a rotary platform and a track chassis of the demolition robot respectively, and L7-L1 represent a distance between a center of mass of the cabin and the corresponding tipping line, a distance between a center of mass of the mechanical arm and the corresponding tipping line, a distance between a center of mass of the hydraulic system and the corresponding tipping line, a distance between a center of mass of the electrical system and the corresponding tipping line, a distance between a center of mass of the power system and the corresponding tipping line, a distance between a center of mass of the rotary platform and the corresponding tipping line, and a distance between a center of mass of the track chassis and the corresponding tipping line respectively.

7. The risk control method for demolition robots according to claim 1, 2 or 4, wherein determining the posture of the demolition robot and the corresponding posture parameters according to the posture information of the demolition robot comprises:

   calculating front and rear height differences of tracks on two sides at the same moment in the posture information;
   in response to the front and rear height differences of the tracks on two sides being both greater than 0 and greater than a first height difference threshold, determining that the demolition robot is in an uphill posture, the front and rear height differences of the tracks on two sides being parameters for the uphill posture;
   in response to the front and rear height differences of the tracks on two sides being both less than 0 and less than a negative value of the first height difference threshold, determining that the demolition robot is in a downhill posture, the front and rear height differences of the tracks on two sides being parameters for the downhill posture;
   calculating a height difference between a left track and a right track at the same moment in the posture information;

in response to the height difference between the left track and the right track being greater than a second height difference threshold, determining that the demolition robot is in a tilted posture, the height difference between the left track and the right track being a parameter for the tilted posture; and

in response to the front and rear height differences of the tracks on two sides being within the range of the first threshold and the negative value of the first threshold, and the height difference between the left track and the right track being not greater than the second height difference threshold, determining that the demolition robot is in a horizontal posture, a parameter for the horizontal posture being 0.

8. A risk control apparatus for demolition robots, comprising a first apparatus configured to work in real time during a walking process of a demolition robot, wherein the first apparatus comprises:

a working condition module configured to determine a posture of the demolition robot and corresponding posture parameters according to posture information of the demolition robot; **characterized in that** the first apparatus further comprises:

a risk category module configured to, according to the posture parameters, the posture information and environmental information of the demolition robot, use a trained neural network to determine a risk category associated with the demolition robot;

a path planning module configured to, in response to the risk category comprising solely walking path risks, re-plan a walking path according to the environmental information of the demolition robot, and control the demolition robot according to the re-planned walking path;

a stability control module configured to, in response to the risk category comprising solely tipping risks, determine a tipping direction of the demolition robot according to the posture information of the demolition robot and a tipping line, and adjust the posture of the demolition robot according to the tipping direction; and

a sequential control module configured to, in response to the risk category comprising tipping risks and walking path risks, determine a tipping direction of the demolition robot according to the posture information of the demolition robot and a tipping line, adjust the posture of the demolition robot according to the tipping direction, re-plan a walking path according to the environmental information of the demolition robot after the tipping risks are removed, and control the demolition robot according to the re-planned walking path.

9. A computer-readable storage medium, wherein the computer-readable storage medium stores one or more programs, and the one or more programs comprise instructions which, when executed by a computing device, cause the computing device to implement the method according to any one of claims 1-7.

10. A computer device, comprising:
one or more processors and one or more memories, wherein one or more programs are stored in the one or more memories and configured to be executed by the one or more processors, and the one or more programs comprise instructions for implementing the method according to any one of claims 1-7.

**Patentansprüche**

1. Ein Risikokontrollverfahren für Abbruchroboter, umfassend ein erstes Verfahren, das in Echtzeit während des Gehvorgangs eines Abbruchroboters implementiert wird, wobei das erste Verfahren Folgendes umfasst:
Bestimmung der Körperhaltung des Abbruchroboters und der entsprechenden Körperhaltungsparameter anhand der Körperhaltungsinformationen des Abbruchroboters; **dadurch gekennzeichnet, dass** das erste Verfahren ferner Folgendes umfasst:

Anhand der Körperhaltungsparameter, der Körperhaltungsinformationen und der Umgebungsinformationen des Abbruchroboters wird mithilfe eines trainierten neuronalen Netzes eine Risikokategorie für den Abbruchroboter ermittelt;

Als Reaktion auf die Risikokategorie, die ausschließlich Risiken im Zusammenhang mit dem Gehweg umfasst, wird ein Gehweg entsprechend den Umgebungsinformationen des Abbruchroboters neu geplant und der Abbruchroboter entsprechend dem neu geplanten Gehweg gesteuert;

Als Reaktion auf die Risikokategorie, die ausschließlich Kipprisiken umfasst, wird die Kipprichtung des Abbruchroboters anhand der Lageinformationen des Abbruchroboters und einer Kipplinie bestimmt und die Lage des Abbruchroboters entsprechend der Kipprichtung angepasst; und

Als Reaktion auf die Risikokategorie, die Kipprisiken und Risiken des Gehwegs umfasst, wird die Kipprichtung des Abbruchroboters anhand der Körperhaltungsinformationen des Abbruchroboters und einer Kipplinie bestimmt, die Körperhaltung des Abbruchroboters entsprechend der Kipprichtung angepasst, ein Gehweg anhand der Umgebungsinformationen des Abbruchroboters neu geplant, nachdem die Kipprisiken beseitigt wurden, und der Abbruchroboter entsprechend dem neu geplanten Gehweg gesteuert.

2. Das Risikokontrollverfahren für Abbruchroboter nach Anspruch 1, ferner umfassend ein zweites Verfahren, das in Echtzeit während des Betriebs des Abbruchroboters implementiert wird, wobei das zweite Verfahren Folgendes umfasst:

Bestimmung der Körperhaltung des Abbruchroboters anhand der Körperhaltungsinformationen des Abbruchroboters;
Ermittlung, ob von dem Abbruchroboter Kipprisiken ausgehen, anhand der Körperhaltung des Abbruchroboters, der Körperhaltungsinformationen des Abbruchroboters und der Kipplinie; und
Als Reaktion auf das Vorhandensein von Kippgefahren wird die Kipprichtung des Abbruchroboters anhand der Körperhaltungsinformationen des Abbruchroboters und der Kipplinie bestimmt und die Körperhaltung des Abbruchroboters entsprechend der Kipprichtung angepasst.

3. Das Risikokontrollverfahren für Abbruchroboter nach Anspruch 1 oder 2, wobei die Bestimmung der Kipprichtung des Abbruchroboters anhand der Körperhaltungsinformationen des Abbruchroboters und der Kipplinie Folgendes umfasst:

Anhand der Kippwinkel auf den Kipplinien in den Körperhaltungsinformationen wird die Wahrscheinlichkeit berechnet, dass jeder Kippwinkel einen entsprechenden Winkelschwellenwert überschreitet; und
Bestimmung der Kipprichtung des Abbruchroboters gemäß einer Kipplinie, die einer maximalen Wahrscheinlichkeit entspricht.

4. Das Risikokontrollverfahren für Abbruchroboter nach Anspruch 1, ferner umfassend ein drittes Verfahren zur Durchführung eines Notstopps im Betrieb oder während des Fahrvorgangs des Abbruchroboters, wobei das dritte Verfahren Folgendes umfasst:

Bestimmung der Körperhaltung des Abbruchroboters anhand der Körperhaltungsinformationen des Abbruchroboters;
Ermittlung, ob von dem Abbruchroboter Kipprisiken ausgehen, anhand der Körperhaltung des Abbruchroboters, der Körperhaltungsinformationen des Abbruchroboters während des Notstopps und der Kipplinie; und
Als Reaktion auf das Vorhandensein von Kippgefahren, Ermittlung der Kipprichtung des Abbruchroboters anhand der Körperhaltungsinformationen des Abbruchroboters während des Notstopps und Anpassung der Körperhaltung des Abbruchroboters entsprechend der Kipprichtung.

5. Das Risikokontrollverfahren für Abbruchroboter nach Anspruch 2 oder 4, wobei die Feststellung, ob der Abbruchroboter Kipprisiken aufweist, Folgendes umfasst:

Berechnung eines Stabilitätskoeffizienten des Abbruchroboters anhand der Hebelarmlänge zwischen dem Massenschwerpunkt der Komponenten des Abbruchroboters in den Körperhaltungsinformationen und einer entsprechenden Kipplinie, wobei der Stabilitätskoeffizient des Abbruchroboters das Verhältnis eines stabilisierenden Moments des Abbruchroboters zu einem Kippmoment darstellt und die entsprechende Kipplinie die der Körperhaltung des Abbruchroboters entsprechende Kipplinie ist; und
als Reaktion darauf, dass der Stabilitätskoeffizient des Abbruchroboters unterhalb eines Stabilitätsschwellenwerts liegt, Feststellung, dass der Abbruchroboter Kippgefahren ausgesetzt ist.

6. Das Risikokontrollverfahren für Abbruchroboter nach Anspruch 5, wobei die Formel zur Berechnung des Stabilitätskoeffizienten des Abbruchroboters wie folgt lautet:

$$K=M1/M0;$$

$$M1=G7xL7+ G6xL6+ G5xL5+ G3xL3+ G2xL2+ G1XL1;$$

$$M0 = G4 \times L4;$$

wobei K der Stabilitätskoeffizient des Abbruchroboters ist, M1 das Stabilisierungsmoment des Abbruchroboters, M0 das Kippmoment des Abbruchroboters, G7-G1 die Gravitationskräfte einer Kabine, eines mechanischen Arms, eines Hydrauliksystems, eines elektrischen Systems, eines Antriebssystems, einer Drehplattform bzw. eines Kettenfahrwerks des Abbruchroboters darstellen und L7-L1 jeweils den Abstand zwischen dem Massenschwerpunkt der Kabine und der entsprechenden Kipplinie, dem Massenschwerpunkt des mechanischen Arms und der entsprechenden Kipplinie, dem Massenschwerpunkt des Hydrauliksystems und der entsprechenden Kipplinie, dem Massenschwerpunkt des elektrischen Systems und der entsprechenden Kipplinie, dem Massenschwerpunkt des Antriebssystems und der entsprechenden Kipplinie, dem Massenschwerpunkt der Drehplattform und der entsprechenden Kipplinie sowie dem Massenschwerpunkt des Kettenfahrwerks und der entsprechenden Kipplinie darstellen.

7. Das Risikokontrollverfahren für Abbruchroboter nach Anspruch 1, 2 oder 4, wobei die Bestimmung der Körperhaltung des Abbruchroboters und der entsprechenden Körperhaltungsparameter anhand der Körperhaltungsinformationen des Abbruchroboters Folgendes umfasst:

Berechnung der vorderen und hinteren Höhenunterschiede der Ketten auf beiden Seiten zum gleichen Zeitpunkt anhand der Körperhaltungsinformationen;
Als Reaktion darauf, dass die Höhenunterschiede der Ketten an Vorder- und Rückseite auf beiden Seiten jeweils größer als 0 und größer als ein erster Schwellenwert für Höhenunterschiede sind, Feststellung, dass sich der Abbruchroboter in einer Bergauf-Körperhaltung befindet, wobei die Höhenunterschiede der Ketten an Vorder- und Rückseite auf beiden Seiten die Parameter für die Bergauf-Körperhaltung sind;
Als Reaktion darauf, dass die Höhenunterschiede der Ketten an Vorder- und Rückseite auf beiden Seiten jeweils kleiner als 0 und kleiner als ein negativer Wert des ersten Schwellenwerts für Höhenunterschiede sind, dass sich der Abbruchroboter in einer Bergab-Körperhaltung befindet, wobei die Höhenunterschiede der Ketten an Vorder- und Rückseite auf beiden Seiten die Parameter für die Bergab-Körperhaltung sind;
Berechnung eines Höhenunterschieds zwischen einer linken und einer rechten Spur zum gleichen Zeitpunkt in den Körperhaltungsinformationen;
Als Reaktion darauf, dass der Höhenunterschied zwischen der linken und der rechten Schiene einen zweiten Schwellenwert überschreitet, Feststellung, dass sich der Abbruchroboter in einer geneigten Körperhaltung befindet, wobei der Höhenunterschied zwischen der linken und der rechten Schiene ein Parameter für die geneigte Körperhaltung ist; und
Als Reaktion darauf, dass die Höhenunterschiede der Ketten an Vorder- und Rückseite beider Seiten innerhalb des Bereichs des ersten Schwellenwerts und des negativen Werts des ersten Schwellenwerts liegen und der Höhenunterschied zwischen der linken und der rechten Kette nicht größer als der zweite Schwellenwert für Höhenunterschiede ist, Feststellung, dass sich der Abbruchroboter in einer horizontalen Körperhaltung befindet, wobei der Parameter für die horizontale Körperhaltung 0 ist.

8. Eine Risikokontrollvorrichtung für Abbruchroboter, umfassend eine erste Vorrichtung, die so konfiguriert ist, dass sie während des Gehvorgangs eines Abbruchroboters in Echtzeit arbeitet, wobei die erste Vorrichtung Folgendes umfasst:

ein Betriebszustandsmodul, das so konfiguriert ist, dass es eine Körperhaltung des Abbruchroboters und entsprechende Körperhaltungsparameter anhand von Körperhaltungsinformationen des Abbruchroboters bestimmt; **dadurch gekennzeichnet, dass** die erste Vorrichtung ferner Folgendes umfasst:
ein Risikokategoriemodul, das so konfiguriert ist, dass es anhand der Körperhaltungsparameter, der Körperhaltungsinformationen und der Umgebungsinformationen des Abbruchroboters mithilfe eines trainierten neuronalen Netzes eine dem Abbruchroboter zugeordnete Risikokategorie bestimmt;
ein Wegplanungsmodul, das so konfiguriert ist, dass es in Reaktion auf die Risikokategorie, die ausschließlich Risiken auf dem Gehweg umfasst, einen Gehweg gemäß den Umgebungsinformationen des Abbruchroboters neu plant und den Abbruchroboter entsprechend dem neu geplanten Gehweg steuert;
ein Stabilitätskontrollmodul, das so konfiguriert ist, dass es in Reaktion auf die Risikokategorie, die ausschließlich Kipprisiken umfasst, anhand der Körperhaltungsinformationen des Abbruchroboters und einer Kipplinie die Kipprichtung des Abbruchroboters bestimmt und die Körperhaltung des Abbruchroboters entsprechend der Kipprichtung anpasst; und
Ein sequentielles Steuermodul, das so konfiguriert ist, dass es in Reaktion auf die Risikokategorie, die Kipprisiken und Risiken des Gehwegs umfasst, die Kipprichtung des Abbruchroboters anhand der Körperhaltungsinformationen des Abbruchroboters und einer Kipplinie bestimmt, die Körperhaltung des Abbruchroboters entsprechend der Kipprichtung anpasst, einen Gehweg entsprechend den Umgebungsinformationen des Abbruchroboters neu plant, nachdem die Kipprisiken beseitigt wurden, und den Abbruchroboter entsprechend dem neu geplanten Gehweg steuert.

9. Ein computerlesbares Speichermedium, wobei das computerlesbare Speichermedium ein oder mehrere Programme speichert und das oder die Programme Anweisungen enthalten, die, wenn sie von einem Computer ausgeführt werden, den Computer veranlassen, das Verfahren gemäß einem der Ansprüche 1-7 durchzuführen.

10. Ein Computergerät, umfassend:
ein oder mehrere Prozessoren und einen oder mehrere Speicher, wobei ein oder mehrere Programme in dem oder den Speichern gespeichert und so konfiguriert sind, dass sie von dem oder den Prozessoren ausgeführt werden können, wobei die ein oder mehreren Programme Anweisungen zur Durchführung des Verfahrens nach einem der Ansprüche 1-7 enthalten.

**Revendications**

1. Procédé de contrôle des risques pour des robots de démolition, comprenant un premier procédé mis en œuvre en temps réel lors d'un processus de marche d'un robot de démolition, le premier procédé comprenant :
déterminer la posture du robot de démolition et les paramètres de posture correspondants selon les informations de posture du robot de démolition ; **caractérisé en ce que** le premier procédé comprend en outre :

   selon les paramètres de posture, les informations de posture et les informations environnementales du robot de démolition, utilisant un réseau de neurones entraîné pour déterminer une catégorie de risque associée au robot de démolition ;
   en réponse à la catégorie de risque comprenant uniquement les risques de chemin de marche, la replanification d'un chemin selon les informations environnementales du robot de démolition, et le contrôle du robot de démolition selon le chemin replanifié ;
   en réponse à la catégorie de risque comprenant uniquement les risques de basculement, la détermination d'une direction de basculement du robot de démolition selon les informations de posture du robot de démolition et une ligne de basculement, et l'ajustement de la posture du robot de démolition selon la direction de basculement ; et
   en réponse à la catégorie de risque comprenant les risques de basculement et de chemin de marche, déterminer la direction de basculement du robot de démolition selon les informations de posture du robot de démolition et une ligne de basculement, ajuster la posture du robot de démolition selon la direction de basculement, replanifier un chemin de démolition selon les informations environnementales du robot de démolition après la suppression des risques de basculement, et le contrôle du robot de démolition selon le chemin de marche replanifié.

2. Procédé de contrôle des risques pour des robots de démolition selon la revendication 1, comprenant en outre un second procédé mis en œuvre en temps réel dans le fonctionnement du robot de démolition, le second procédé comprenant :

   déterminer la posture du robot de démolition selon les informations de posture du robot de démolition ;
   déterminer si le robot de démolition présente des risques de basculement en fonction de sa posture, de ses informations de posture et de la ligne de basculement ; et
   en réponse à la présence de risques de basculement, déterminer la direction de basculement du robot de démolition en fonction des informations de posture du robot et de la ligne de basculement, et ajuster la posture du robot de démolition selon la direction de basculement.

3. Procédé de contrôle des risques pour des robots de démolition selon la revendication 1 ou 2, dans lequel la détermination de la direction de basculement du robot de démolition selon les informations de posture du robot de démolition et la ligne de basculement, comprend :

   selon les angles de basculement sur les lignes de basculement dans l'information de posture, calculer la probabilité que chaque angle de basculement dépasse un seuil d'angle correspondant ; et
   selon une ligne de basculement correspondant à une probabilité maximale, déterminer la direction de basculement du robot de démolition.

**4.** Procédé de contrôle des risques pour des robots de démolition selon la revendication 1, comprenant en outre un troisième procédé pour mettre en œuvre un arrêt d'urgence en fonctionnement ou pendant la marche du robot de démolition, le troisième procédé comprenant :

déterminer la posture du robot de démolition selon les informations de posture du robot de démolition ;
déterminer si le robot de démolition présente des risques de basculement selon sa posture, les informations de posture du robot lors de l'arrêt d'urgence et la ligne de basculement ; et
en réponse à la présence de risques de basculement, déterminer la direction de basculement du robot de démolition en fonction des informations de posture du robot lors de l'arrêt d'urgence, et ajuster la posture du robot de démolition selon la direction de basculement.

**5.** Procédé de contrôle des risques pour des robots de démolition selon la revendication 2 ou 4, dans lequel la détermination que le robot de démolition présente des risques de renversement comprend :

calculer un coefficient de stabilité du robot de démolition selon une longueur de bras de moment entre un centre de masse des composants du robot de démolition dans l'information de posture et une ligne de basculement correspondante, le coefficient de stabilité du robot de démolition étant un rapport entre un moment de stabilisation du robot de démolition et un moment de basculement, et la ligne de basculement correspondante étant une ligne de basculement correspondant à la posture du robot de démolition ; et
en réponse au coefficient de stabilité du robot de démolition inférieur à un seuil de stabilité, il est déterminé que le robot de démolition présente des risques de basculement.

**6.** Procédé de contrôle des risques pour des robots de démolition selon la revendication 5, dans lequel une formule pour calculer le coefficient de stabilité du robot de démolition est la suivante :

$$K = M1/M0 ;$$

$$M1 = G7 \times L7 + G6 \times L6 + G5 \times L5 + G3 \times L3 + G2 \times L2 + G1 \times L1 ;$$

$$M0 = G4 \times L4 ;$$

où K est le coefficient de stabilité du robot de démolition, M1 est le moment de stabilisation du robot de démolition, M0 est le moment de basculement du robot de démolition, G7-G1 représentent respectivement les forces gravitationnelles d'une cabine, d'un bras mécanique, d'un système hydraulique, d'un système électrique, d'un système de puissance, d'une plateforme rotative et d'un châssis de chenille du robot de démolition respectivement, et L7-L1 représentent une distance entre un centre de masse de la cabine et la ligne de basculement correspondante, une distance entre un centre de masse du bras mécanique et la ligne de basculement correspondante, une distance entre un centre de masse du système hydraulique et la ligne de basculement correspondante, une distance entre un centre de masse du système électrique et la ligne de basculement correspondante, une distance entre un centre de masse du système de puissance et la ligne de basculement correspondante, une distance entre un centre de masse de la plateforme rotative et la ligne de basculement correspondante, et une distance entre un centre de masse du châssis de la chenille et la ligne de basculement correspondante respectivement.

**7.** Procédé de contrôle des risques pour des robots de démolition selon la revendication 1, 2 ou 4, dans lequel la détermination de la posture du robot de démolition et des paramètres de posture correspondants selon les informations de posture du robot de démolition comprend :

calculer simultanément les différences de hauteur avant et arrière des chenilles sur deux côtés dans les informations de posture ;
en réponse aux différences de hauteur avant et arrière des chenilles sur deux côtés supérieures à 0 et supérieures au seuil de différence de hauteur initial, déterminer que le robot de démolition est en position verticale, les différences de hauteur avant et arrière des chenilles sur deux côtés étant des paramètres de la posture en montée ;
en réponse aux différences de hauteur avant et arrière des chenilles sur deux côtés inférieures à 0 et inférieures à une valeur négative du premier seuil de différence de hauteur, déterminer que le robot de démolition est en position descendante, les différences de hauteur avant et arrière des chenilles sur deux côtés étant des paramètres de la posture en descente ;

calculer une différence de hauteur entre une trajectoire à gauche et une trajectoire à droite en même temps dans les informations de posture ;

en réponse au fait que la différence de hauteur entre la chenille gauche et la chenille droite est supérieure à un seuil de différence de hauteur d'une seconde, déterminer que le robot de démolition est en posture inclinée, la différence de hauteur entre la chenille gauche et la chenille droite étant un paramètre pour la posture inclinée ; et

en réponse au fait que les différences de hauteur avant et arrière des chenilles sur deux côtés se situent dans la plage du premier seuil et de la valeur négative du premier seuil, et que la différence de hauteur entre la chenille gauche et la chenille droite n'est pas supérieure au second seuil de différence de hauteur, ce qui détermine que le robot de démolition est en posture horizontale, un paramètre pour la posture horizontale étant 0.

8. Appareil de contrôle des risques pour robots de démolition, comprenant un premier appareil configuré pour fonctionner en temps réel lors d'un processus de marche d'un robot de démolition, dans lequel le premier appareil comprend :

un module de fonctionnement configuré pour déterminer la posture du robot de démolition et les paramètres de posture correspondants selon les informations de posture du robot de démolition ; **caractérisée en ce que** le premier appareil comprend en outre :

un module de catégorie de risque configuré, selon les paramètres de posture, les informations de posture et les informations environnementales du robot de démolition, pour utiliser un réseau de neurones entraîné pour déterminer une catégorie de risque associée au robot de démolition ;

un module de planification de chemin configuré, en réponse à la catégorie de risque comprenant uniquement les risques de chemin pour la marche, pour replanifier un chemin selon les informations environnementales du robot de démolition, et contrôler le robot de démolition selon le chemin replanifié ;

un module de contrôle de stabilité configuré, en réponse à la catégorie de risque comprenant uniquement les risques de basculement, pour déterminer la direction de basculement du robot de démolition selon les informations de posture du robot de démolition et une ligne de basculement, et ajuster la posture du robot de démolition selon la direction de basculement ; et

un module de contrôle séquentiel configuré, en réponse à la catégorie de risque comprenant les risques de basculement et les risques de chemin de marche, pour déterminer la direction de basculement du robot de démolition selon les informations de posture du robot de démolition et une ligne de basculement, ajuster la posture du robot de démolition selon la direction de basculement, replanifier un chemin de marche selon les informations environnementales du robot de démolition après la suppression des risques de basculement, et contrôler le robot de démolition selon le chemin de marche replanifié.

9. Support de stockage lisible par ordinateur, dans lequel le support de stockage lisible stocke un ou plusieurs programmes, et ces programmes comprennent des instructions qui, exécutées par un dispositif informatique, poussent le dispositif de calcul à implémenter le procédé selon l'une des revendications 1 à 7.

10. Appareil informatique, comprenant :
un ou plusieurs processeurs et une ou plusieurs mémoires, un ou plusieurs programmes étant stockés dans une ou plusieurs mémoires et configurés pour être exécutés par un ou plusieurs processeurs, et un ou plusieurs programmes comprenant des instructions pour implémenter le procédé selon l'une quelconque des revendications 1 à 7.

determining a posture of the demolition robot according to posture information of the demolition robot

according to posture parameters, posture information and environmental information of the demolition robot, using a trained neural network to determine risk categories associated with the demolition robot;

tipping risks — Yes → determining a tipping direction of the demolition robot according to the posture information of the demolition robot and a tipping line, and adjusting the posture of the demolition robot according to the tipping direction

No

No

walking path risks

Yes

re-planning a walking path according to the environmental information of the demolition robot, and controlling the demolition robot according to the re-planned walking path

Fig. 1

longitudinal tipping
line 2

longitudinal
tipping line 1

lateral tipping line 1

oblique tipping
line 1

oblique tipping
line 3

oblique tipping
line 4

oblique tipping
line 2

lateral tipping line
2

Fig. 2

determining the posture of the demolition robot according to the posture information of the demolition robot

determining whether tipping risks exist in the demolition robot according to the posture of the demolition robot, the posture information of the demolition robot and the tipping line

in response to the presence of tipping risks, determining the tipping direction of the demolition robot according to the posture information of the demolition robot and the tipping line, and adjusting the posture of the demolition robot according to the tipping direction

Fig. 3

Fig. 4

determining the posture of the demolition robot
according to the posture information of the demolition
robot

determining whether tipping risks exist in the demolition
robot according to the posture of the demolition robot,
the posture information of the demolition robot during
the emergency stop and the tipping line

in response to the presence of tipping risks, determining
the tipping direction of the demolition robot according to
the posture information of the demolition robot during
the emergency stop, and adjusting the posture of the
demolition robot according to the tipping direction

Fig. 5

**EP 4 697 121 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9475193 B2

- CA 3049695 C

**Non-patent literature cited in the description**

- Neural-network-based observer for real-time tipover estimation. **MEGHDARI et al.** MECHATRONICS. PERGAMON PRESS, 01 October 2005, vol. 15, 989-1004

- Design and implementation of an intelligent monitoring system for real-time tip-over assessment of mobile manipulator. **LAWRENCE D et al.** 2022 IEEE 14TH INTERNATIONAL CONFERENCE ON HUMANOID, NANOTECHNOLOGY, INFORMATION TECHNOLOGY, COMMUNICATION AND CONTROL, ENVIRONMENT, AND MANAGEMENT (HNICEM). IEEE, 01 December 2022, 1-6